# FASCICULE DE BREVET EUROPEEN

(11) **EP 1 141 561 B1**
(45) Date de publication et mention de la délivrance du brevet: **11.09.2002**
(21) Numéro de dépôt: 99959492.2
(22) Date de dépôt: 17.12.1999
(51) Int. Cl.: F16B 21/04, B65G 47/84

(54) **DISPOSITIF DE FIXATION A MONTAGE-DEMONTAGE RAPIDE D'UNE PIECE MECANIQUE EN APPUI SUR UNE EMBASE DE SUPPORT**
BEFESTIGUNGSVORRICHTUNG ZUM SCHNELLEN AN- BZW. ABKOPPELN EINES BAUTEILS AN EINE BZW. VON EINER AUFLAGEFLÄCHE
FIXING DEVICE WITH QUICK MOUNTING AND DISMOUNTING OF A MECHANICAL PART RESTING ON A SUPPORT BASE

(30) Priorité: 22.12.1998 FR 9816238
(43) Date de publication de la demande: 10.10.2001
(73) Titulaire: SERAC GROUP, 72400 La Ferté-Bernard (FR)
(72) Inventeur: DE VILLELE, Damien, F-72400 La Ferté Bernard (FR)
(74) Mandataire: Fruchard, Guy
(86) Numéro de dépôt international: FR9903182
(87) Numéro de publication internationale: WO00037810

(56) Documents cités:
- DE-U- 9 417 856
- FR-A- 2 599 064
- US-A- 4 362 413

## Description

La présente invention concerne un dispositif de fixation à montage-démontage rapide d'une pièce mécanique en appui sur une embase de support.

Bien que l'invention ne soit pas limitée à un type spécifique de pièce mécanique à fixer sur son embase de support, elle vise tout particulièrement la fixation d'outillages sur une embase de support associée, lesquels outillages nécessitent d'être mis en place de façon rapide et précise sur leur embase de support, puis fixés à celle-ci de façon fiable. On pourra en particulier se référer à des outillages équipant les installations de conditionnement, notamment les installations de remplissage ou bouchage de récipients. Les outillages de telles installations comprennent classiquement des profilés de guidage se présentant sous la forme de profils plats incurvés, et des étoiles ou barillets dont les encoches incurvées ou alvéoles servent à entraîner les récipients en déplacement sur la ligne de convoyage de l'installation de conditionnement.

Dans les installations existantes, ces outillages sont fixés par des liaisons amovibles de plusieurs types. On distingue des systèmes avec liaison simple de type vis-écrou, adjoints ou non de brides escamotables, ou des systèmes à excentrique, ou encore des systèmes à levier de type sauterelles ou autres systèmes à déformation élastique.

On connaît du document US 4,362,413 un dispositif de montage rapide comportant un mécanisme de serrage du type vis-écrou dans lequel l'écrou comporte des ergots formant avec une pièce femelle en regard un mécanisme de verrouillage à baïonnette. L'ensemble ainsi formé est manoeuvré par la tête de la vis. Après engagement de l'écrou dans la pièce femelle, la tête de la vis est mise en rotation dans le sens du vissage et entraîne tout d'abord l'écrou en rotation jusqu'à une mise en butée des ergots. Une poursuite de la rotation de la tête de vis provoque alors un serrage par vissage de la vis dans l'écrou.

Cette séquence de mouvement du dispositif repose exclusivement sur la valeur relative des efforts résistants auxquels sont soumis les couples vis-écrou d'une part et ergots-pièce femelle d'autre part, de sorte que si l'écrou est mal engagé dans la pièce femelle, la rotation de la tête de vis peut provoquer un serrage alors que le verrouillage n'est pas convenablement effectué. En outre, lors du desserrage il n'est pas possible de s'assurer que le mécanisme à baïonnette est commandé en rotation. Ce dispositif est donc prévu pour un montage unique.

L'invention a pour objet de concevoir un dispositif de fixation à montage-démontage, qui soit à la fois rapide et fiable tant en ce qui concerne le verrouillage que le serrage lors de manipulations répétées de montage et de démontage.

En outre, lorsque le dispositif de fixation est destiné à équiper les installations de conditionnement ou autres installations concernant le domaine alimentaire, on cherche à faire en sorte que la fixation obtenue soit non salissante, c'est-à-dire exempte de parties extérieures présentant des particules polluantes telles que de la graisse. Enfin, pour respecter les impératifs recherchés de rapidité des opérations de montage-démontage, l'accessibilité des moyens d'actionnement et la simplicité des opérations de manoeuvre constituent naturellement un objectif tout particulièrement recherché du mode de réalisation préféré de l'invention.

Ce problème est résolu conformément à l'invention grâce à un dispositif de fixation à montage-démontage rapide d'une pièce mécanique en appui sur une embase de support, ce dispositif comportant un mécanisme de verrouillage du type à baïonnette et un mécanisme de serrage associé du type à vis-écrou agencé coaxialement audit mécanisme de verrouillage, ces deux mécanismes étant commandés l'un après l'autre par actionnement dans un même sens d'un organe de manoeuvre tournant commun, le dispositif comporte un moyen de couplage provisoire interposé entre l'organe de commande d'une part et les mécanismes de verrouillage et de serrage d'autre part et agencé de telle façon que, dans une première plage de rotation de l'organe de manoeuvre, ledit organe de manoeuvre soit lié en rotation au mécanisme de verrouillage et que, dans une seconde plage de rotation de l'organe de manoeuvre, ledit organe de manoeuvre soit désolidarisé du mécanisme de verrouillage et actionne le mécanisme de serrage

Le moyen de couplage provisoire assure ainsi une mise en oeuvre précise du mécanisme de verrouillage et du mécanisme de vissage de sorte que ces deux fonctions peuvent être assurées dans le bon ordre aussi bien lors du montage que du démontage par une simple inversion de la commande de l'organe de manoeuvre.

Conformément à un mode d'exécution particulièrement avantageux, le moyen de couplage provisoire comporte une couronne solidaire en rotation de la vis du mécanisme de serrage, agencée entre l'organe de manoeuvre formant l'écrou du mécanisme de serrage et une tête fixe rigidement solidaire de la pièce mécanique à fixer ou de l'embase de support, et un organe de couplage passant dans un perçage traversant associé de la couronne, ledit organe de couplage étant partiellement reçu soit dans un perçage borgne de l'organe de manoeuvre dans la première plage de rotation dudit organe de manoeuvre, soit dans un perçage borgne associé de la tête fixe dans la seconde plage de rotation de l'organe de manoeuvre. En particulier, l'organe de couplage pourra être constitué par une bille d'acier. Il est alors avantageux de prévoir que la couronne et la tête fixe portent des moyens homologues de butée et/ou d'indexage servant à délimiter la première plage de rotation de l'organe de manoeuvre, de préférence selon un angle court de type quart de tour.

De préférence encore, la couronne et l'organe de manoeuvre portent des moyens homologues d'entraînement en rotation intervenant lors du dévissage dudit organe de manoeuvre. Le processus de démontage peut alors se dérouler de façon extrêmement simple, sans avoir à utiliser un quelconque outil extérieur.

Il est également avantageux de prévoir que la couronne soit solidaire en rotation de la vis par une liaison à crantage autorisant un mouvement relatif dans la direction de l'axe de la vis.

Lorsqu'il s'agit d'un dispositif de fixation dans lequel la tête fixe est rigidement solidaire de la pièce mécanique à fixer, il est avantageux de prévoir que le mécanisme de verrouillage comporte une tige coaxiale à et solidaire de la vis du mécanisme de serrage, ladite tige présentant une extrémité libre à parties saillantes passant par une découpe adaptée de l'embase de support.

En variante, lorsqu'il s'agit d'un dispositif dans lequel la tête fixe est rigidement solidaire de l'embase de support, il sera avantageux de prévoir que le mécanisme de verrouillage comporte une tige coaxiale à et solidaire de la vis du mécanisme de serrage, ladite tige présentant une extrémité libre à parties saillantes passant par une découpe adaptée de la pièce mécanique à fixer.

Conformément à une autre variante intéressante du dispositif de fixation, dans lequel la tête fixe est rigidement solidaire de l'embase de support, il sera prévu que la couronne du moyen de couplage provisoire présente des parties périphériques saillantes permettant de verrouiller la pièce mécanique à fixer qui est en appui sur l'embase de support et centrée sur ladite tête fixe grâce à une découpe adaptée de ladite pièce, ladite couronne formant alors un composant du mécanisme de verrouillage.

Avantageusement alors, les profils extérieurs de la couronne et de l'organe de manoeuvre sont inclus dans le profil de la découpe de la pièce mécanique à fixer, de façon à permettre une mise en place ou une extraction de ladite pièce, dans la position angulaire correspondante, sans avoir à démonter l'organe de manoeuvre.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre en perspective éclatée un dispositif de fixation conforme à l'invention, plus particulièrement destiné à la fixation d'une pièce mécanique, ici un outillage constitué par deux profilés de guidage superposés, en appui sur une embase de support;
- les figures 2a, 2b, 2c sont des vues en perspective illustrant respectivement la mise en place de la pièce mécanique sur son embase de support, l'actionnement du mécanisme de verrouillage du type à baïonnette, et enfin l'actionnement du mécanisme de serrage associé du type à vis-écrou;
- la figure 3 illustre une variante dans laquelle le dispositif de fixation n'est pas embarqué comme dans le cas du mode d'exécution précédent, mais est solidaire de l'embase de support à laquelle est suspendue une pièce mécanique qui pourrait par exemple être une piste de guidage pour les récipients d'une installation de conditionnement;
- la figure 4 illustre en perspective, et en vue éclatée, une variante du dispositif de fixation précédent, dans laquelle la couronne du moyen de couplage provisoire constitue un composant du mécanisme de verrouillage, la position illustrée étant celle de la mise en place de la pièce mécanique, ici un outillage constitué par une double étoile d'installation de conditionnement de récipients;
- les figures 5a et 5b sont des vues éclatées en perspective illustrant le dispositif de fixation de la figure 4, respectivement en position de mise en place de la pièce mécanique et en position de verrouillage de cette pièce sur son support après actionnement du mécanisme de verrouillage de type à baïonnette;
- les figures 6a et 6b illustrent en perspective le dispositif de fixation précédent, respectivement en fin d'actionnement du mécanisme de verrouillage, et en fin d'actionnement du mécanisme de serrage associé.

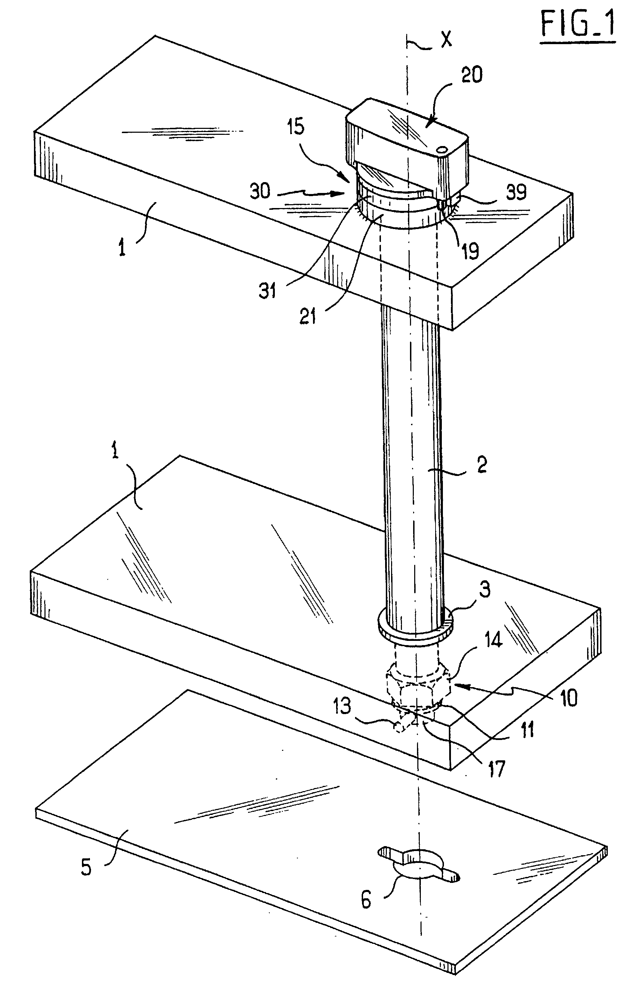

On va maintenant décrire un premier mode d'exécution de l'invention en référence aux figures 1 à 2c.

La pièce mécanique à fixer est un outillage, ici constitué de deux profilés 1 superposés, formant par exemple un ensemble de deux profilés de guidage incurvés tels que ceux qui sont utilisés dans les installations de conditionnement, en particulier les installations de remplissage ou bouchage de récipients, afin de maintenir les récipients en défilement au niveau d'une étoile ou d'un barillet associé. Les profilés 1 sont ici séparés par un tube creux de liaison 2 dans lequel passe un certain nombre d'organes servant à la fixation de cet outillage sur une embase de support notée 5.

Le dispositif de fixation comporte tout d'abord un mécanisme de verrouillage 10 dont on distingue sur la figure 1 une partie des composants. En effet, le profilé 1 inférieur est maintenu entre une collerette d'appui 3 rigidement solidaire du tube creux 2, et un écrou 14. Au-delà de l'écrou 14, on distingue l'extrémité libre 17 d'une tige centrale passant à l'intérieur du tube creux 2, comportant des parties saillantes ici réalisées sous la forme d'une goupille transversale 13. L'embase de support 5, ici schématisée sous la forme d'une simple plaque, comporte une découpe 6 dont le profil est adapté pour permettre soit le passage de la partie de verrouillage du mécanisme 10 à baïonnette, c'est-à-dire l'extrémité inférieure 17 avec sa goupille 13, soit, après rotation de celle-ci, le verrouillage axial conformément au principe classique des mécanismes à baïonnette. L'embase de support 5 est alors enserrée entre une rondelle 11 en appui contre l'écrou 14, et les deux branches de la goupille 13.

Il est également prévu un mécanisme de serrage associé noté 15 du type à vis-écrou, qui est agencé coaxialement au mécanisme de verrouillage 10. L'axe commun de ces mécanismes, qui correspond à l'axe du tube creux 2, est noté X.

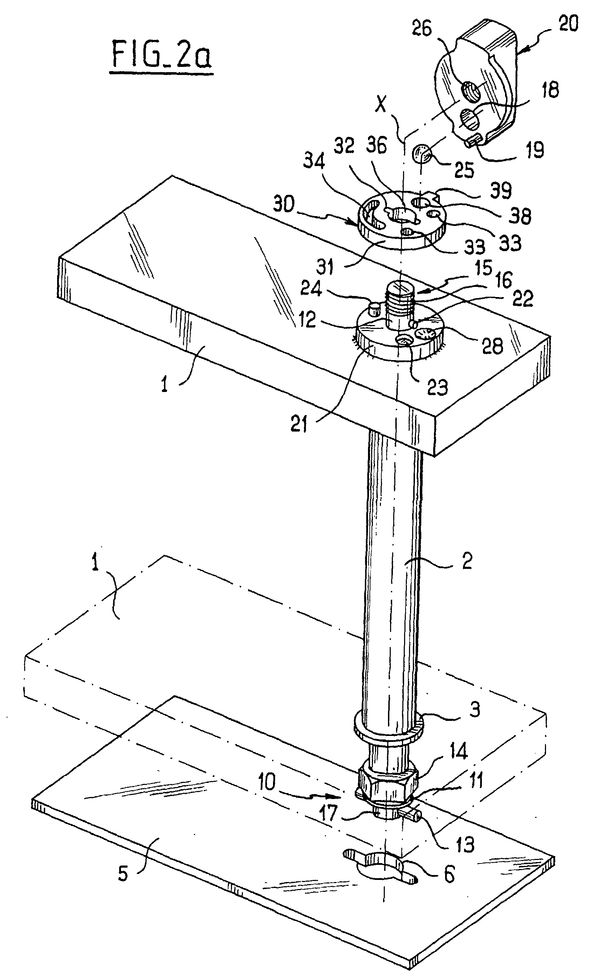

Ainsi que cela va être expliqué plus en détail en référence aux figures 2a à 2c, les deux mécanismes 10 et 15 sont commandés l'un après l'autre par actionnement, dans un même sens, d'un organe de manoeuvre tournant commun noté 20 formant l'écrou du mécanisme de serrage 15, avec interposition d'un moyen de couplage provisoire 30, dont on distingue sur la figure 1 la couronne 31 qui est solidaire en rotation de la vis du mécanisme de serrage 15. Comme on le verra, le moyen de couplage provisoire 30 est agencé de telle façon que, dans une première plage de rotation de l'organe de manoeuvre 20, ledit organe de manoeuvre soit lié en rotation à la vis du mécanisme de serrage 15 à vis-écrou dont l'écrou est constitué par l'organe de manoeuvre commun 20, et actionne alors le mécanisme de verrouillage 10, et que, dans une seconde plage de rotation de l'organe de manoeuvre 20, ledit organe de manoeuvre puisse librement se visser ou se dévisser sur la vis du mécanisme de serrage 15 et actionne alors ledit mécanisme de serrage.

La structure et le fonctionnement du moyen de couplage provisoire 30 seront mieux compris en se reportant aux figures 2a à 2c.

Le profilé supérieur 1 porte une tête fixe 21 qui lui est rigidement solidaire, cette tête fixe ayant ici la forme d'un disque plat circulaire. Au centre de la tête fixe 21, passe l'extrémité supérieure d'une tige 12 dont l'extrémité inférieure est l'extrémité 17 précitée portant la goupille de verrouillage 13. Cette extrémité supérieure se termine par une portion filetée 16 qui est justement la vis du mécanisme de serrage 15 dont l'écrou est constitué par l'organe de manoeuvre commun 20. En effet, l'organe de manoeuvre 20 présente un taraudage central 26 permettant son vissage sur la portion filetée 16. La tige 12 surmontée de la portion filetée 16 peut librement tourner à l'intérieur du tube creux 2, ce qui permet de modifier la position angulaire de la goupille de verrouillage 13 destinée à coopérer avec les bords de la découpe 6. Cette tige 12 est en outre montée de façon à disposer d'un certain débattement axial selon l'axe X, ce qui va permettre le serrage de la liaison déjà verrouillée, par le mécanisme 15 du type à vis-écrou, après actionnement du mécanisme du verrouillage 10 du type à baïonnette.

Le moyen de couplage provisoire 30 comporte une couronne 31, se présentant ici sous la forme d'un disque circulaire plat, de préférence métallique, qui est solidaire en rotation de la vis 16 du mécanisme de serrage 15. Ceci résulte ici de la présence d'une part, sur la tige 12, d'une goupille saillante 22, et d'autre part d'encoches 32 homologues prévues dans le perçage central 36 de la couronne 31. Un organe de couplage 25, ici réalisé sous la forme d'une bille d'acier, passe dans un perçage traversant associé 38 de la couronne 31. Cet organe de couplage 25 est en outre partiellement reçu soit dans un perçage borgne associé (ou empreinte) 18 de l'organe de manoeuvre 20 dans une première plage de rotation dudit organe de manoeuvre, soit dans un perçage borgne associé (ou empreinte) 28 de la tête fixe 21 dans une seconde plage de rotation de l'organe de manoeuvre 20.

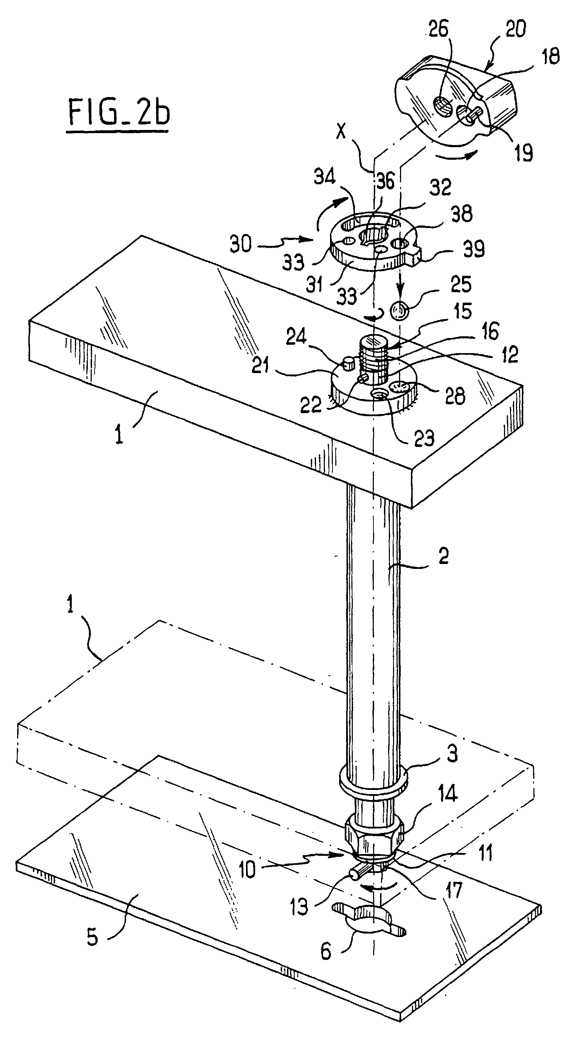

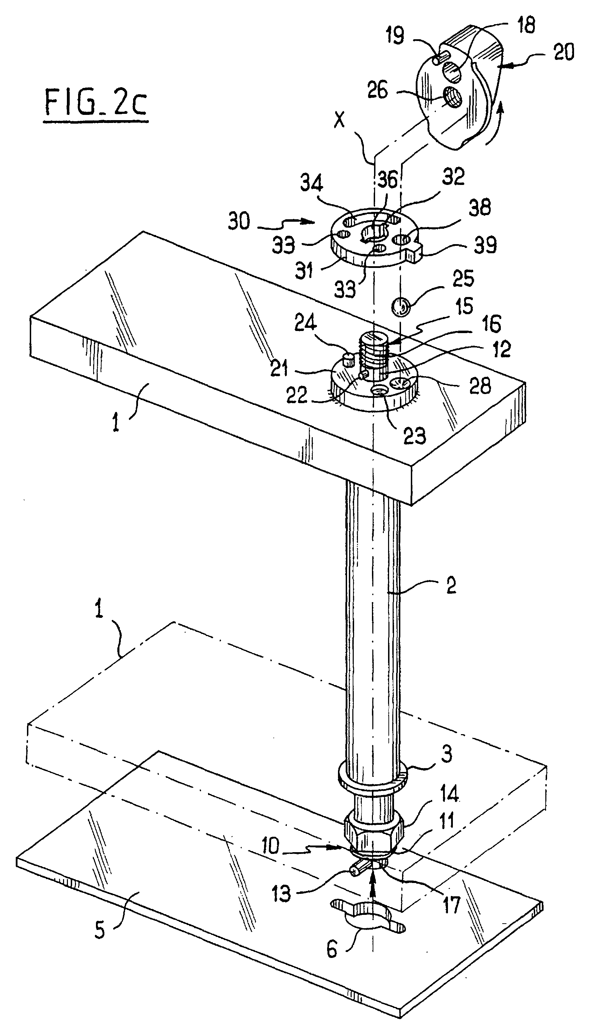

Lors de la mise en place, comme illustré sur la figure 2a, et jusqu'à la fin de la première plage de rotation de l'organe de manoeuvre 20, l'organe de couplage (bille) 25 repose sur la face plane supérieure de la tête fixe 21, et réalise alors un couplage entre la couronne 31 et l'organe de manoeuvre 20. Ceci correspond à l'actionnement du seul mécanisme de verrouillage 10. A la fin de cette première plage de rotation de l'organe de manoeuvre 20 (position de la figure 2b), le perçage traversant 38 arrive au droit du perçage borgne 28 de la tête fixe 21, et la bille de couplage 25 se déplace pour être alors partiellement reçue dans ce perçage borgne 28, rompant alors la liaison en rotation entre l'organe de manoeuvre 20 et la couronne 31, et établissant le couplage entre ladite couronne 31 et la tête fixe 21. La poursuite de la rotation de l'organe de manoeuvre commun 20, comme illustré sur la figure 2c, correspond alors à une phase de serrage, les composants qui réalisent le verrouillage à baïonnette restant quant à eux parfaitement immobiles en rotation.

Ainsi, pour fixer l'outillage sur son embase de support 5, il suffit d'actionner en rotation l'organe de manoeuvre commun 20 sur une première plage de rotation, ce qui produit l'actionnement du mécanisme de verrouillage 20 du type à baïonnette (de la position illustrée en figure 2a à la position illustrée en figure 2b), puis de poursuivre la rotation de cet organe de manoeuvre commun 20, toujours dans le même sens, pour actionner le mécanisme de serrage bloquant le verrouillage positif déjà réalisé par le mécanisme de verrouillage 10 (de la position illustrée en figure 2b à la position illustrée en figure 2c). Dans la première plage de rotation, il n'y a aucun vissage de l'organe de manoeuvre 20 sur l'extrémité filetée 16 du fait du couplage provisoire réalisé par la couronne 31, alors que dans la seconde plage de rotation, le couplage provisoire entre l'organe de manoeuvre 20 et la couronne 31 est supprimé, et cette couronne 31 ne peut plus continuer à tourner autour de l'axe X du fait de son couplage par la même bille 25 à la tête fixe 21. Lors de cette seconde plage de rotation, l'organe de couplage 20 est en appui sur la face supérieure de la couronne 31, et le vissage dudit organe a pour effet de remonter légèrement les composants du mécanisme de verrouillage, c'est-à-dire la tige 12 avec sa goupille 13, comme cela est illustré par la flèche sur la figure 2c, ce qui parfait la fixation de l'outillage sur son embase de support.

Il est par ailleurs intéressant de prévoir des moyens de butée et/ou d'indexage servant à délimiter la première plage de rotation de l'organe de manoeuvre 20, laquelle première plage pourra être constituée par un angle court de type quart de tour.

On distingue à cet effet des moyens homologues de butée, constitués par un téton saillant 24 porté par la tête fixe 21, et par une lumière circulaire 34 (quart de cercle) prévue sur la couronne 31. Il va de soi que l'on pourrait inverser ces moyens, et prévoir un téton saillant inférieurement de la couronne 31 et une lumière-circulaire usinée dans la tête fixe 21. Pour marquer avec un maximum de précision les deux positions extrêmes de cette première plage de rotation de la couronne 31 par rapport à la tête fixe 21, ce qui est notamment important pour permettre la descente correcte sans coincement de la bille de couplage 25 lorsque celle-ci arrive au droit du perçage borgne 28, on a en outre prévu des moyens homologues d'indexage constitués ici par une bille à ressort 23 logée dans la tête fixe 21, et deux perçages ou empreintes 33 agencées dans la face inférieure de la couronne 31. Comme pour les moyens de butée, on-pourrait naturellement inverser les moyens homologues d'indexage précités.

Lorsque l'on veut procéder au démontage, il suffit de faire tourner l'organe de manoeuvre 20 dans le sens contraire pour desserrer d'abord la liaison serrée précédemment réalisée. Dans cette plage de rotation, le mécanisme de serrage 15 intervient seul car la couronne 31 reste couplée en rotation à la tête fixe 21.

Il faut ensuite rétablir le couplage entre la couronne 31 et l'organe de manoeuvre 20, pour permettre l'actionnement du mécanisme de verrouillage 10.

A cet effet, il est tout d'abord prévu que la couronne 31 et l'organe de manoeuvre 20 portent des moyens homologues d'entraînement en rotation intervenant lors du dévissage dudit organe de manoeuvre. En l'espèce, ces moyens homologues sont constitués par une goupille 19 portée par l'organe de manoeuvre 20 et un taquet saillant 39 solidaire de la couronne 31. En fin de dévissage, la goupille 19 vient au contact du taquet 39, de sorte que la poursuite de la rotation de l'organe de manoeuvre 20 entraîne alors en rotation la couronne 31. Grâce à une forme adéquate du perçage borgne 28 de la tête fixe 21, qui sera de préférence organisé sous la forme d'une cuvette par exemple conique, cette poursuite de la rotation de la couronne 31 provoque la remontée progressive de la bille de couplage 25 et sa sortie du perçage borgne 28. Ainsi, la poursuite de la rotation de l'organe de manoeuvre 20 avec l'entraînement en rotation de la couronne 31 peut se poursuivre normalement, ce qui permet l'actionnement du mécanisme de verrouillage du type à baïonnette 10, et par suite la libération de la pièce mécanique qui était en appui sur l'embase de support 5.

On aura compris que, lors du serrage ou du desserrage, la tige 12 du mécanisme de verrouillage 10 du type à baïonnette, effectue un léger mouvement axial dans la direction de l'axe X, et ce mouvement est justement rendu possible par la liaison à crantage entre la couronne 31 et la vis 16, liaison ici réalisée par la goupille 22 et les encoches ou cannelures associées 32, laquelle liaison autorise un mouvement relatif dans la direction de l'axe X de la vis 16.

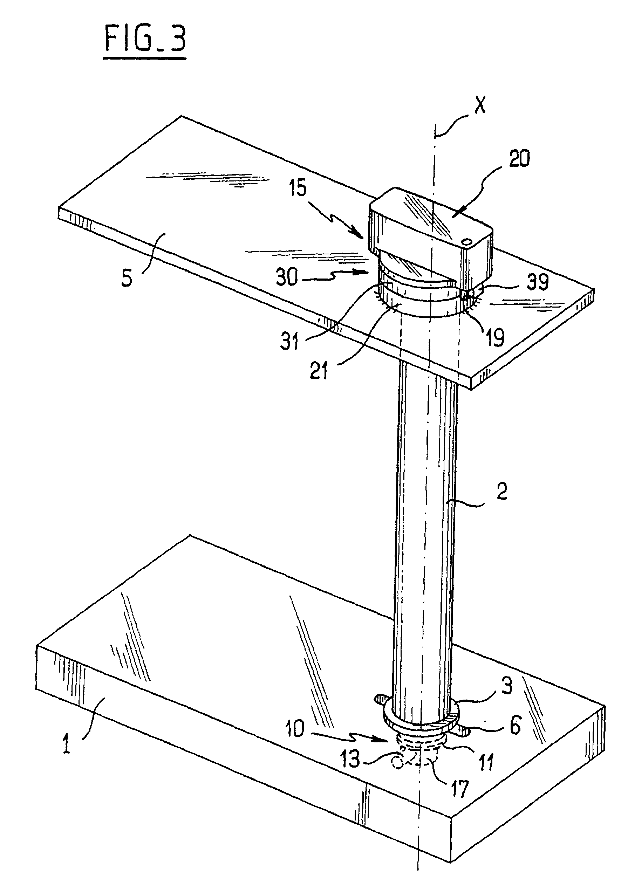

Dans le mode d'exécution qui vient d'être décrit en référence aux figures 1 et 2a à 2c, le dispositif de fixation était embarqué, c'est-à-dire monté sur la pièce mécanique à fixer. Il va de soi que l'on pourra inverser cet agencement, et la figure 3 vient justement illustrer une telle possibilité.

Sur la figure 3, l'embase de support 5 porte une pièce ici unique 1, au moyen d'un dispositif de fixation dont les composants sont exactement identiques à ceux du dispositif qui vient d'être décrit. Toutefois, la tête fixe 21 faisant partie du moyen de couplage provisoire 30 est maintenant rigidement solidaire de l'embase de support 5. Dans ce cas, le mécanisme de verrouillage 10 comporte comme précédemment une tige coaxiale à et solidaire de la vis du mécanisme de serrage 15, mais cette tige présente une extrémité libre 17 à parties saillantes 13 qui passe par une découpe adaptée 6 maintenant prévue sur la pièce mécanique à fixer 1. On pourra encore renverser l'agencement illustré sur la figure 3, et prévoir une pièce à fixer en appui par le dessus sur une embase de support, l'organe de manoeuvre commun étant alors disposé inférieurement sous l'embase de support.

Le dispositif de fixation qui vient d'être décrit convient tout particulièrement pour fixer de façon rapide et fiable des profilés de guidage équipant une installation de conditionnement, en particulier une installation de remplissage ou bouchage de récipients. Le dispositif de fixation selon l'invention peut également être adapté pour la fixation d'autres types d'outillages, notamment des outillages montés tournants autour d'un axe vertical. Dans le cas d'installations de conditionnement, les outillages tournants concernés seront par exemple des étoiles simples ou doubles à encoches périphériques incurvées.

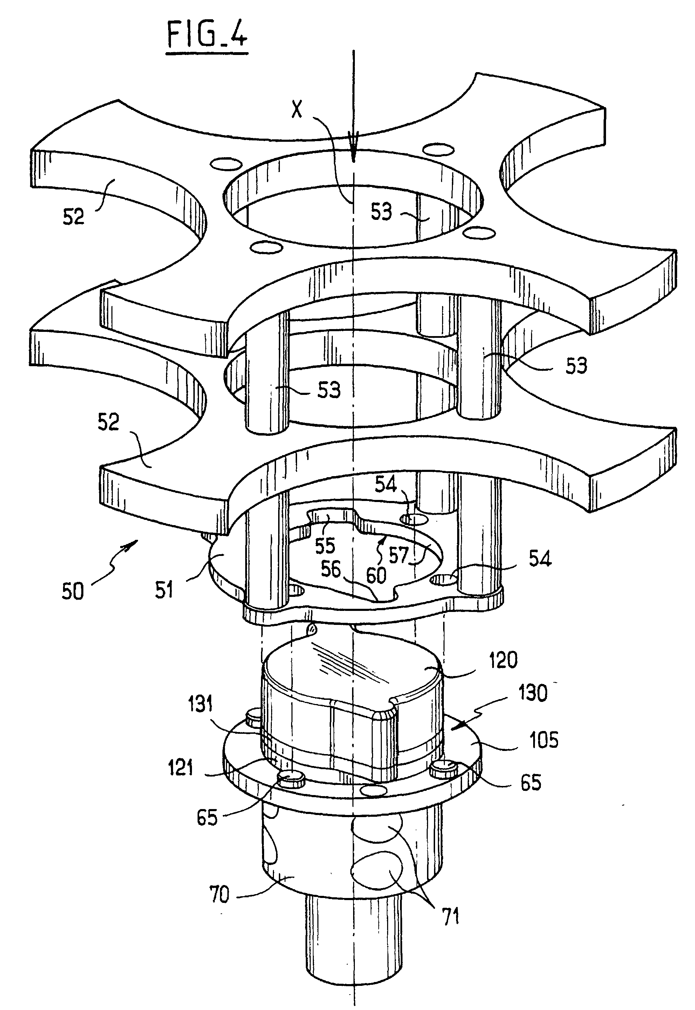

On va illustrer à titre d'exemple un mode d'exécution du dispositif de fixation selon l'invention, plus particulièrement agencé pour mettre en oeuvre un tel mode de fixation d'outillage, et ce en se référant aux figures 4 à 6b.

Sur la figure 4 on distingue un outillage 50 constitué ici par deux étoiles 52 superposées d'axe X, réunies entre elles par des colonnettes axiales 53. En partie basse de l'outillage, on distingue un socle plat 51 sur lequel sont montées les quatre colonnettes 53 au niveau de perçages associés 53.1. Ce socle 51 présente une découpe centrale 60 centrée sur l'axe X, avec des encoches diamétralement opposées 55, 56 sur lesquelles on reviendra dans la suite de la description. L'outillage 50 peut être mis en place par son socle 51 sur une embase de support 105. Cette embase de support 105 fait partie en l'espèce d'un boîtier tournant 70 agencé pour une rotation autour de l'axe X (l'entraînement est par exemple réalisé par un moteur accouplé par des griffes intervenant au niveau d'encoches 71). Au niveau de sa face d'appui, l'embase de support 105 présente des tétons d'indexage 65 qui passent dans des perçages traversants associés 54 du socle 51. Une fois le socle 51 correctement mis en place, la fixation peut alors être réalisée par un dispositif analogue à celui précédemment décrit. Pour éviter d'alourdir inutilement la description, on pourra se référer à la description détaillée qui précède, les pièces homologues portant les mêmes références augmentées de 100.

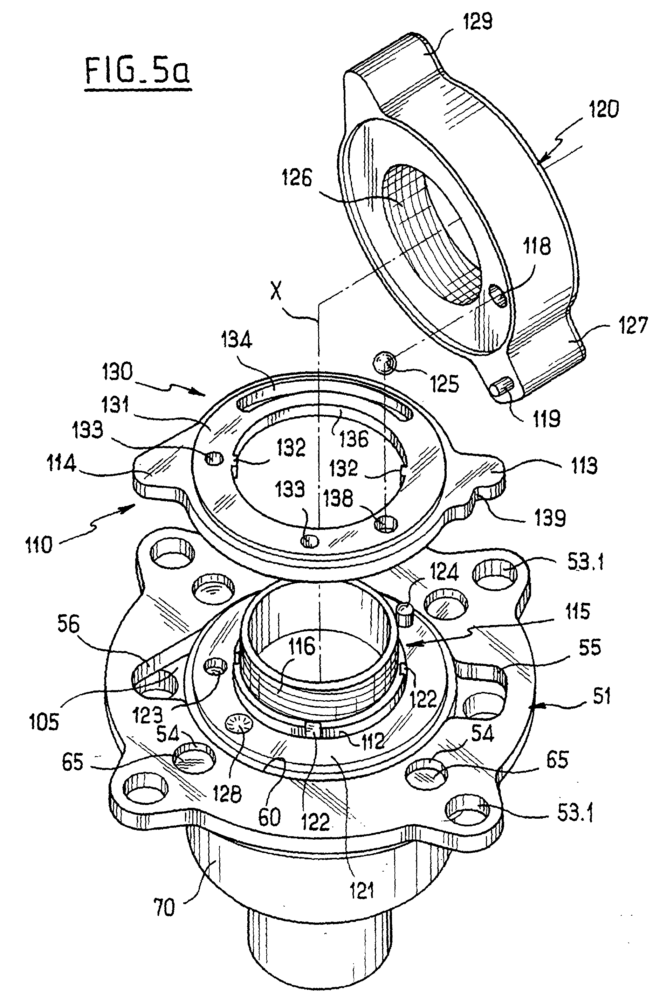

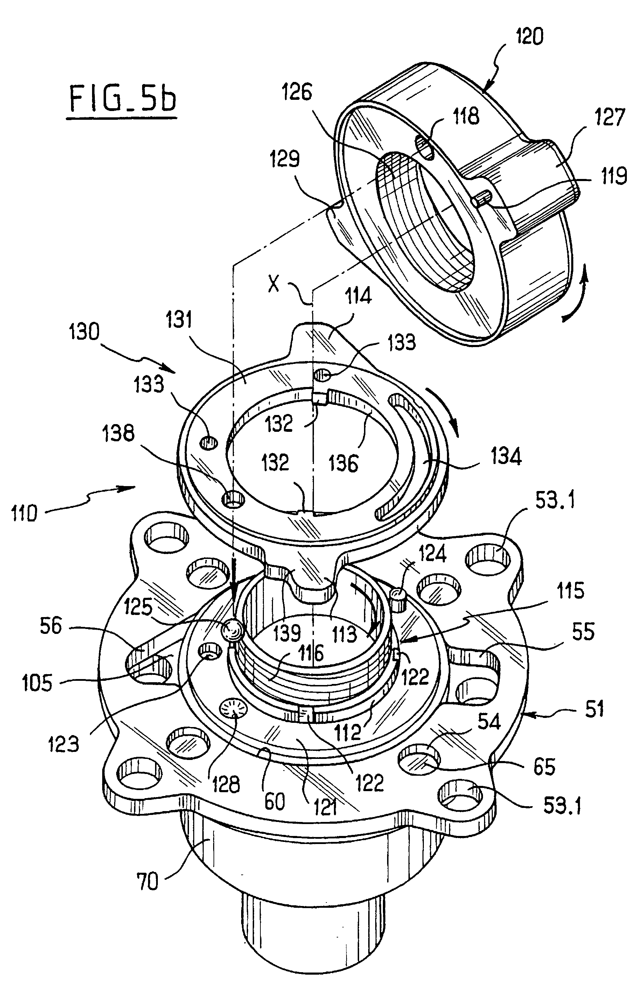

Ainsi que cela est mieux visible sur les figures 5a et 5b, on constate que le boîtier 70 et l'embase de support 105 sont surmontés d'une tête fixe 121 de forme circulaire. Le socle 51 de l'outillage 50 est en appui sur l'embase de support 105 et centré sur la tête fixe 121 grâce à la partie circulaire 57 de la découpe 60 du socle 51. Sur la face d'appui supérieure de la tête fixe 121, on retrouve le téton 124 faisant partie des moyens de butée, la bille à ressort 123 faisant partie des moyens d'indexage, et le perçage borgne en forme d'empreinte conique 128 prévue pour le couplage par la bille 125. Dans le boîtier 70, la tige centrale 112 est montée tournante, et cette tige est surmontée d'une portion filetée 116.

L'organe de manoeuvre commun 120 comporte comme précédemment un filetage central 126, un perçage borgne 118 associé à la bille de couplage 125, et une goupille 119 destinée à coopérer avec un taquet homologue 139 solidaire de la couronne 131 du moyen de couplage provisoire 130 lors du dévissage.

Comme précédemment, la couronne 131 du moyen de couplage provisoire 130 présente une ouverture centrale 136 correspondant au diamètre extérieur de la tige 112, et la liaison par crantage avec cette dernière est alors assurée par deux saillies 132 diamétralement opposées qui sont reçues dans des encoches 122. On notera sur les figures la présence de quatre encoches 122, ce qui permet d'avoir quatre positions différentes de référence (contre deux pour la variante précédemment décrite). La couronne 131 présente encore un perçage traversant 138 associé à la bille de couplage 125, et deux perçages ou empreintes 133 associés à la bille d'indexage 123 pour marquer le début et la fin de la première plage de rotation de l'organe de manoeuvre 120 correspondant à l'actionnement du seul mécanisme de verrouillage.

A la différence du mécanisme précédemment décrit, on constate que la couronne 131 du moyen de couplage provisoire 130 présente des parties périphériques saillantes 113, 114 qui permettent de verrouiller la pièce mécanique à fixer 51 en appui sur l'embase de support 105, de sorte que la couronne 131 forme alors un composant du mécanisme de verrouillage à baïonnette 110.

Dans la position de la figure 5a, la bille de couplage 125 lie en rotation l'organe de manoeuvre 120 et la couronne 131, de sorte que la mise en rotation de l'organe de manoeuvre 120 produit une rotation correspondante de la couronne 131, et donc des parties saillantes de celle-ci 113, 114.

On constate que la découpe 60 du socle 51 présente des encoches 55, 56 qui, lors de la mise en place, viennent à l'aplomb des parties saillantes 113, 114. La mise en rotation de l'organe de manoeuvre tournant 120 fait alors passer ces parties saillantes 113, 114 sur la face supérieure du socle 51, ce qui réalise le verrouillage positif désiré par ce nouveau mécanisme de verrouillage 110 du type à baïonnette.

Après une rotation, ici d'un quart de tour, on arrive à la position de la figure 5b, à l'issue de laquelle la bille de couplage 125 se déplace vers le bas pour être partiellement reçue dans le perçage borgne 128 de la tête fixe 121. La portion d'extrémité 116 est alors bloquée en rotation, ce qui permet l'actionnement de l'organe 120 dans le sens d'un vissage pour réaliser le serrage définitif.

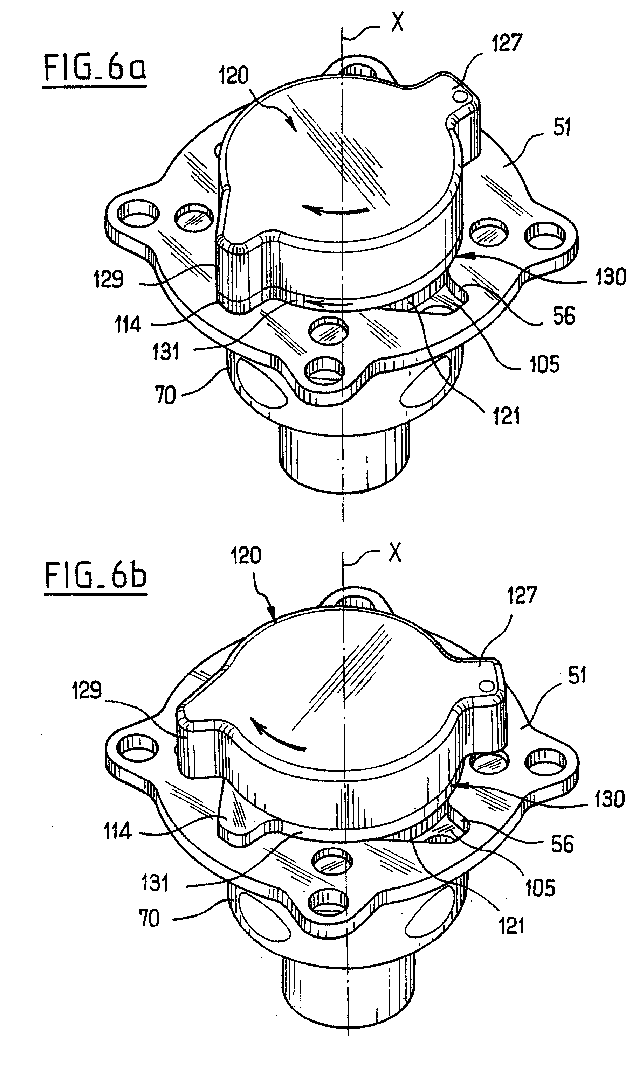

Les deux plages de rotation successives sont particulièrement bien visibles sur les représentations des figures 6a et 6b :
- sur la figure 6a, la position correspond à la fin de la plage de rotation commune de l'organe de manoeuvre 120 et de la couronne 131, plage au cours de laquelle le mécanisme de verrouillage du type à baïonnette 110 intervient seul ;
- sur la figure 6b, la poursuite de la rotation de l'organe de manoeuvre 120 n'entraîne plus en rotation la couronne 131 qui est verrouillée en rotation sur la tête fixe 121, ce qui correspond à une phase de serrage par actionnement du seul mécanisme de serrage du type à vis-écrou. Le jeu entre la couronne 131 et le socle 51 est alors réduit à zéro, et on finit par maintenir un effort permanent du socle 51 sur son embase de support, en général après moins d'un demi-tour.

Pour démonter l'outillage, il suffit de faire tourner l'organe de manoeuvre 120 dans l'autre sens, ce qui actionne d'abord le mécanisme de vissage 115, puis le mécanisme de verrouillage à baïonnette 110.

On constatera également que les profils extérieurs de la couronne 131, en particulier la forme des parties périphériques saillantes centrales 113 et 114 de celle-ci, et de l'organe de manoeuvre 120, en particulier les excroissances périphériques de manoeuvre 127 et 129 de celui-ci, sont inclus dans le profil de la découpe 60 du socle 51. Ceci permet donc une mise en place ou une extraction de la pièce 51, dans la position angulaire correspondante, sans avoir à démonter l'organe de manoeuvre 120. On obtient ainsi une mise en place extrêmement rapide, avec un parfait centrage et une prise de référence immédiate.

Dans tous les cas, le dispositif de fixation selon l'invention permet d'obtenir une fixation particulièrement fiable. En effet, même si l'opérateur n'applique pas un serrage élevé, la couronne de couplage 31 ou 131 verrouille en rotation la vis 16 ou 116 lorsque la pièce mécanique est fixée sur son embase de support. Ce blocage constitue une sécurité très importante (serrage irréversible) qui interdit toute désolidarisation accidentelle de la pièce mécanique, notamment lorsque l'ensemble est soumis à des vibrations ou reçoit des chocs accidentels.

On est ainsi parvenu à combiner un verrouillage et un serrage sans jeu et rigide, avec une commande unique et rapide par simple rotation, laissant la possibilité d'une géométrie de faible encombrement et non salissante.

L'invention n'est pas limitée aux modes de réalisation qui viennent d'être décrits, mais englobe au contraire toute variante reprenant, avec des moyens équivalents, les caractéristiques essentielles énoncées plus haut.

On pourra en particulier prévoir un système imperdable pour la liaison vissée entre l'organe de manoeuvre commun et la portion filetée associée, par exemple avec un ergot latéral saillant sur cette portion filetée passant dans une gorge associée de l'organe de manoeuvre.

On pourra également prévoir, dans le cas d'un mode d'exécution du type des figures 4 et suivantes, des poussoirs à bille supplémentaires sur la tête fixe, servant à soulever légèrement la couronne de couplage provisoire en début de rotation.

On pourra encore prévoir un dispositif dans lequel l'organe de manoeuvre ne forme pas l'écrou du mécanisme de serrage. Dans ce cas l'organe de manoeuvre peut être relié en permanence à l'organe de couplage provisoire, ce dernier étant alternativement associé à un élément du mécanisme de verrouillage et à un élément du mécanisme de serrage.

## Revendications

1. Dispositif de fixation à montage-démontage rapide d'une pièce mécanique (1, 2 ; 50, 51) en appui sur une embase de support (5 ; 105), ce dispositif comportant un mécanisme de verrouillage (10 ; 110) du type à baïonnette et un mécanisme de serrage associé (15 ; 115) du type à vis-écrou agencé coaxialement audit mécanisme de verrouillage, ces deux mécanismes (10, 15 ; 110, 115) étant commandés l'un après l'autre par actionnement dans un même sens d'un organe de manoeuvre tournant commun (20 ; 120) **caractérisé en ce qu'**il comporte un moyen de couplage provisoire (30 ; 130) interposé entre l'organe de commande d'une part et les mécanismes de verrouillage et de serrage d'autre part et agencé de telle façon que, dans une première plage de rotation de l'organe de manoeuvre (20 ; 120), ledit organe de manoeuvre soit lié en rotation au mécanisme de verrouillage (10 ; 110), et que, dans une seconde plage de rotation de l'organe de manoeuvre (20 ; 120), ledit organe de manoeuvre soit désolidarisé du mécanisme de verrouillage et actionne le mécanisme de serrage (15 ; 115).

2. Dispositif de fixation selon la revendication 1, **caractérisé en ce que** le moyen de couplage provisoire (30 ; 130) comporte une couronne (31 ; 131) solidaire en rotation de la vis (16 ; 116) du mécanisme de serrage (15; 115), agencée entre l'organe de manoeuvre (20 ; 120) formant l'écrou du mécanisme de serrage et une tête fixe (21 ; 121) rigidement solidaire de la pièce mécanique à fixer (1, 2 ; 50, 51) ou de l'embase de support (5 ; 105), et un organe de couplage (25 ; 125) passant dans un perçage traversant associé (38 ; 138) de la couronne (31 ; 131), ledit organe de couplage (25 ; 125) étant partiellement reçu soit dans un perçage borgne (18 ; 118) de l'organe de manoeuvre (20 ; 120) dans la première plage de rotation dudit organe de manoeuvre, soit dans un perçage borgne associé (28 ; 128) de la tête fixe (21 ; 121) dans la seconde plage de rotation de l'organe de manoeuvre (20 ; 120).

3. Dispositif de fixation selon la revendication 2, **caractérisé en ce que** l'organe de couplage (25 ; 125) est une bille d'acier.

4. Dispositif de fixation selon la revendication 2 ou la revendication 3, **caractérisé en ce que** la couronne (31 ; 131) et la tête fixe (21 ; 121) portent des moyens homologues de butée (24, 34 ; 124, 134) et/ou d'indexage (23, 33 ; 123, 133) servant à délimiter la première plage de rotation de l'organe de manoeuvre (20 ; 120), de préférence selon un angle court de type quart de tour.

5. Dispositif de fixation selon l'une des revendications 2 à 4, **caractérisé en ce que** la couronne (31 ; 131) et l'organe de manoeuvre (20 ; 120) portent des moyens homologues (19, 39 ; 119, 139) d'entraînement en rotation intervenant lors du dévissage dudit organe de manoeuvre.

6. Dispositif de fixation selon l'une des revendications 2 à 5, **caractérisé en ce que** la couronne (31 ; 131) est solidaire en rotation de la vis (16 ; 116) par une liaison à crantage (22, 32 ; 122, 132) autorisant un mouvement relatif dans la direction de l'axe (X) de la vis (16 ; 116).

7. Dispositif de fixation selon l'une des revendications 2 à 6, dans lequel la tête fixe (21) est rigidement solidaire de la pièce mécanique à fixer (1, 2), **caractérisé en ce que** le mécanisme de verrouillage (10) comporte une tige (12) coaxiale à et solidaire de la vis (16) du mécanisme de serrage (15), ladite tige présentant une extrémité libre (17) à parties saillantes (13) passant par une découpe adaptée (6) de l'embase de support (5).

8. Dispositif de fixation selon l'une des revendications 2 à 6, dans lequel la tête fixe (21) est rigidement solidaire de l'embase de support (5), **caractérisé en ce que** le mécanisme de verrouillage (10) comporte une tige (12) coaxiale à et solidaire de la vis (16) du mécanisme de serrage (15), ladite tige présentant une extrémité libre (17) à parties saillantes (13) passant par une découpe adaptée (6) de la pièce mécanique à fixer (1, 2).

9. Dispositif de fixation selon l'une des revendications 2 à 6, dans lequel la tête fixe (121) est rigidement solidaire de l'embase de support (105), **caractérisé en ce que** la couronne (131) du moyen de couplage provisoire (130) présente des parties périphériques saillantes (113, 114) permettant de verrouiller la pièce mécanique à fixer (50, 51) qui est en appui sur l'embase de support (105) et centrée sur ladite tête fixe grâce à une découpe adaptée (60) de ladite pièce (51), ladite couronne formant alors un composant du mécanisme de verrouillage (110).

10. Dispositif de fixation selon la revendication 9, **caractérisé en ce que** les profils extérieurs de la couronne (131) et de l'organe de manoeuvre (120) sont inclus dans le profil de la découpe (60) de la pièce mécanique à fixer (51), de façon à permettre une mise en place ou une extraction de ladite pièce (50, 51), dans la position angulaire correspondante, sans avoir à démonter l'organe de manoeuvre (120).

## Claims

1. A fixing device for quickly fastening and releasing a mechanical part (1, 2; 50, 51) that bears on a support base (5; 105), said device comprising a latching mechanism (10; 110) of the bayonet type and an associated clamping mechanism (15; 115) of the screw-and-nut type organized coaxially with said latching mechanism, the two mechanisms (10, 15; 110, 115) being actuated one after the other by actuating a common rotary drive member in the same direction (20; 120), the device being **characterized in that** it further comprises temporary coupling means (30; 130) interposed between the control member and the latching and clamping mechanisms, and organized in such a manner that over a first angle of rotation of the drive member (20; 120) said drive member is constrained to rotate with the latching mechanism (10; 110), and that over a second angle of rotation of the drive member (20; 120), said drive member is released from the latching mechanism and actuates the clamping mechanism (15; 115).

2. A fixing device according to claim 1, **characterized in that** the temporary coupling means (30; 130) comprises firstly a ring (31; 131) constrained to rotate with the screw (16; 116) of the clamping mechanism (15; 115) organized between the drive member (20; 120) forming the nut of the clamping mechanism and a fixed head (21; 121) rigidly secured to the mechanical part to be fixed (1, 2; 50, 51) or to the support base (5; 105), and secondly a coupling member (25; 125) passing in an associated through bore (38; 138) of the ring (31; 131), said coupling member (25; 125) being partially received either in a blind bore (18; 118) of the drive member (20; 120) over the first angle of rotation of said drive member, or else in an associated blind bore (28; 128) of the fixed head (21; 121) over the second angle of rotation of the drive member (20; 120).

3. A fixing device according to claim 2, **characterized in that** the coupling member (25; 125) is a steel ball.

4. A fixing device according to claim 2 or claim 3, **characterized in that** the ring (31; 131) and the fixed head (21; 121) carry complementary abutment and/or indexing means (24, 34; 124, 134; 23, 33; 123, 133) serving to define the first angle of rotation of the drive member (20; 120), preferably over a short angle of the quarter-turn type.

5. A fixing device according to any one of claims 2 to 4, **characterized in that** the ring (31; 131) and the drive member (20; 120) carry complementary means (19, 39; 119, 139) for rotary drive that act during unscrewing of said drive member.

6. A fixing device according to any one of claims 2 to 5, **characterized in that** the ring (31; 131) is constrained to rotate with the screw (16; 116) by indexed linking (22, 32; 122, 132) that allows relative movement along the direction of the axis (X) of the screw (16; 116).

7. A fixing device according to any one of claims 2 to 6, in which the fixed head (21) is rigidly secured to the mechanical part to be fixed (1, 2), the device being **characterized in that** the latching mechanism (10) comprises a rod (12) that is coaxial with and secured to the screw (16) of the clamping mechanism (15), said rod having a free end (17) with projecting portions (13) passing through a matching cutout (6) in the support plate (5).

8. A fixing device according to any one of claims 2 to 6, in which the fixed head (21) is rigidly secured to the support base (5), the device being **characterized in that** the latching mechanism (10) comprises a rod (12) that is coaxial with and secured to the screw (16) of the clamping mechanism (15), said rod having a free end (17) with projecting portions (13) that pass through a matching cutout (6) in the mechanical part to be fixed (1, 2).

9. A fixing device according to any one of claims 2 to 6, in which the fixed head (121) is rigidly secured to the support base (105), the device being **characterized in that** the ring (131) of the temporary coupling means (130) presents projecting peripheral portions (113, 114) for latching the mechanical part to be fixed (50, 51) which bears on the support base (105), and centered on said fixed head by means of a matching cutout (60) in said part (51), said ring then forming a component of the latching mechanism (110).

10. A fixing device according to claim 9, **characterized in that** the external profiles of the ring (131) and of the drive member (120) are included within the profile of the cutout (60) of the mechanical part to be fixed (51), thereby enabling said part (50, 51) to be put into place or extracted while it is in the corresponding angular position and without it being necessary to remove the drive member (120).

## Patentansprüche

1. Befestigungsvorrichtung zum schnellen Montieren bzw. Demontieren eines Maschinenteils (1, 2; 50, 51) in Anlage an bzw. von einer Auflagefläche (5; 105), wobei diese Vorrichtung einen Verriegelungsmechanismus (10; 110) nach Art eines Bajonettverschlusses und einen dazugehörigen Einspannmechanismus (15, 115) nach Art von Schraube und Mutter hat, der koaxial zu dem genannten Verriegelungsmechanismus angeordnet ist, wobei diese beiden Mechanismen (10, 15; 110, 115) nacheinander durch Betätigung in eine gleiche Richtung eines gemeinsamen drehbaren Stellorgans (20; 120) gesteuert werden, **dadurch gekennzeichnet, daß** sie ein behelfsmäßiges Kopplungsmittel (30; 130) umfaßt, das zwischen dem Stellorgan einerseits und dem Verriegelungs- und dem Einspannmechanismus andererseits angeordnet und derart ausgebildet ist, daß in einem ersten Drehbereich des Stellorgans (20; 120) dieses Stellorgan drehfest mit dem Verriegelungsmechanismus (10; 110) verbunden ist und daß in einem zweiten Drehbereich des Stellorgans (20; 120) dieses Stellorgan von dem Verriegelungsmechanismus gelöst ist und den Einspannmechanismus (15; 115) betätigt.

2. Befestigungsvorrichtung nach Anspruch 1, **dadurch gekennzeichnet, daß** das behelfsmäßige Kopplungsmittel (30; 130) einen Kranz (31; 131) enthält, der drehfest mit der Schraube (16; 116) des Einspannmechanismus (15; 115) verbunden und zwischen dem Stellorgan (20; 120), das die Mutter des Einspannmechanismus bildet, und einem ortsfesten Kopf (21; 121) angeordnet ist, der starr mit dem zu befestigenden Maschinenteil (1, 2; 50, 51) oder der Auflagefläche (5; 105) verbunden ist, sowie ein Kopplungsorgan (25; 125), das durch eine dazugehörige, quer verlaufende Bohrung (38; 138) des Kranzes (31; 131) hindurchgeht, wobei das genannte Kopplungsorgan (25; 125) teilweise entweder in dem ersten Drehbereich des Stellorgans in einer Blindbohrung (18; 118) des Stellorgans (20; 120) oder in dem zweiten Drehbereich des Stellorgans (20; 120) in einer dazugehörigen Blindbohrung (28; 128) des ortsfesten Kopfes (21; 121) aufgenommen ist.

3. Befestigungsvorrichtung nach Anspruch 2, **dadurch gekennzeichnet, daß** das Kopplungsorgan (25; 125) eine Stahlkugel ist.

4. Befestigungsvorrichtung nach Anspruch 2 oder Anspruch 3, **dadurch gekennzeichnet, daß** der Kranz (31; 131) und der ortsfeste Kopf (21; 121) einander entsprechende Anschlagmittel (24, 34; 124, 134) und/oder Indexierungsmittel (23, 33; 123, 133) haben, die dazu dienen, den ersten Drehbereich des Stellorgans (20; 120) zu begrenzen, vorzugsweise über einen kurzen Winkel nach Art einer Vierteldrehung.

5. Befestigungsvorrichtung nach einem der Ansprüche 2 bis 4, **dadurch gekennzeichnet, daß** der Kranz (31; 131) und das Stellorgan (20; 120) einander entsprechende Drehmitnehmer (19, 39; 119, 139) tragen, die während des Losschraubens des genannten Stellorgans ineinander eingreifen.

6. Befestigungsvorrichtung nach einem der Ansprüche 2 bis 5, **dadurch gekennzeichnet, daß** der Kranz (31; 131) drehfest mit der Schraube (16; 116) über eine Rastverbindung (22, 32; 122, 132) verbunden ist, die eine Relativbewegung in Richtung der Achse (X) der Schraube (16; 116) zuläßt.

7. Befestigungsvorrichtung nach einem der Ansprüche 2 bis 6, in der der ortsfeste Kopf (21) starr mit dem zu befestigenden Maschinenteil (1, 2) verbunden ist, **dadurch gekennzeichnet, daß** der Verriegelungsmechanismus (10) eine Stange (12) hat, die koaxial zur Schraube (16) des Einspannmechanismus (15) und fest mit dieser verbunden ist, wobei die genannte Stange ein freies Ende (17) mit vorspringenden Abschnitten (13) aufweist, die durch einen angepaßten Ausschnitt (6) der Auflagefläche (5) hindurchgehen.

8. Befestigungsvorrichtung nach einem der Ansprüche 2 bis 6, in der der ortsfeste Kopf (21) starr mit der Auflagefläche (5) verbunden ist, **dadurch gekennzeichnet, daß** der Verriegelungsmechanismus (10) eine Stange (12) hat, die koaxial zur Schraube (16) des Einspannmechanismus (15) und fest mit dieser verbunden ist, wobei die genannte Stange ein freies Ende (17) mit vorspringenden Abschnitten (13) aufweist, die durch einen angepaßten Ausschnitt (6) des zu befestigenden Maschinenteils (1, 2) hindurchgehen.

9. Befestigungsvorrichtung nach einem der Ansprüche 2 bis 6, in der der ortsfeste Kopf (121) starr mit der Auflagefläche (105) verbunden ist, **dadurch gekennzeichnet, daß** der Kranz (131) des behelfsmäßigen Kopplungsmittels (130) vorspringende Umfangsabschnitte (113, 114) aufweist, die ein Verriegeln des zu befestigenden Maschinenteils (50, 51) ermöglichen, das an der Auflagefläche (105) anliegt und dank eines angepaßten Ausschnittes (60) des genannten Teils (51) um den genannten ortsfesten Kopf herum angeordnet ist, wobei der genannte Kranz dann einen Bestandteil des Verriegelungsmechanismus (110) bildet.

10. Befestigungsvorrichtung nach Anspruch 9, **dadurch gekennzeichnet, daß** die Außenprofile des Kranzes (131) und des Stellorgans (120) in dem Profil des Ausschnittes (60) des zu befestigenden Maschinenteils (51) eingeschlossen sind, derart, daß ein Einsetzen oder ein Herausziehen des genannten Teils (50, 51) in der entsprechenden Winkelposition ermöglicht wird, ohne daß das Stellorgan (120) demontiert werden muß.
